# FASCICULE DE BREVET EUROPEEN

(11) **EP 2 660 406 B1**
(45) Date de publication et mention de la délivrance du brevet: **04.11.2015**
(21) Numéro de dépôt: 13166195.1
(22) Date de dépôt: 02.05.2013
(51) Int. Cl.: E04C 1/41, E04B 1/80

(54) **Bloc de construction thermiquement isolant**
Wärmegedämmter Blockbaustein
Thermally insulating building block

(30) Priorité: 03.05.2012 FR 1254055
(43) Date de publication de la demande: 06.11.2013
(73) Titulaire: Saint-Gobain Weber, 77170 Servon (FR)
(72) Inventeur: Hyrve, Oddvar, 0495 OSLO (NO); Kubina, Libor, 10000 STRASNICE (CZ)
(74) Mandataire: Douysset, Laurence

(56) Documents cités:
- EP-A2- 1 544 367
- EP-A2- 1 988 228
- WO-A2-2011/016961
- AT-U1- 12 147
- DE-A1-102005 032 557
- DE-A1-102007 028 950
- DE-U1-202009 002 697
- DE-U1-202010 009 060
- DE-U1-202011 103 069

## Description

L'invention concerne un bloc de construction thermiquement isolant, plus particulièrement un bloc isolant léger comprenant un panneau isolant sous vide, et son procédé de fabrication.

De nombreux travaux actuels portent sur la recherche de nouveaux matériaux, utilisables dans le domaine de la construction et dont les performances isolantes sont améliorées. Des blocs tels que les briques ou les parpaings allégés comportent souvent des cavités, ce qui, d'une part, les rend plus légers et donc plus faciles à manipuler et d'autre part, leur confère des propriétés isolantes légèrement améliorées. Lorsque ces cavités sont remplies avec de l'air, les performances isolantes du bloc restent assez médiocres.

Afin de palier à ce problème, la demande de brevet EP 2 180 111 décrit un bloc de construction isolant comprenant une ou plusieurs cavités remplies d'isolant thermique à base de fibres minérales et de silice.

La demande DE 20 2007 013 074 décrit des panneaux isolants sous vide, connus pour leurs excellentes propriétés d'isolants thermiques, placés dans les cavités d'une brique creuse, dont les dimensions sont adaptées à la taille des panneaux sous vide. Si les dimensions du panneau sous vide ne sont pas parfaitement bien adaptées à celles des cavités, les performances thermiques sont considérablement diminuées.

Un bloc selon le préambule de la revendication1 est décrit dans le document DE 20 2009 002697 U1.

Il subsiste un besoin pour un bloc de construction présentant une excellente isolation thermique.

La présente invention propose un bloc de construction isolant thermiquement comprenant deux demi-blocs en béton aggloméré comprenant des granulats en argile expansée ayant chacun une face interne et une face externe, un panneau isolant sous vide étant placé entre les faces internes de chacun des deux demi-blocs et encapsulé dans une mousse organique expansée.

Avantageusement, selon la présente invention, le bloc de construction est constitué uniquement de l'assemblage de deux demi-blocs en béton aggloméré comprenant des granulats en argile expansé avec un panneau isolant sous vide encapsulé dans une mousse organique expansée.

Les panneaux isolants sous vide sont constitués d'un noyau isolant emprisonné entre deux pellicules étanches réflectrices, le coeur isolant étant ensuite mise en dépression, sous vide. Les pellicules étanches comprennent des couches d'aluminium très fines (de l'ordre de 10 nm) et sont en général des multicouches composites polymère/aluminium.
Ces panneaux sont de faibles épaisseurs et permettent de réduire considérablement la quantité de matériau isolant nécessaire. A titre d'exemple, à résistance thermique équivalente, il faut 1 cm de panneau sous vide contre 6 cm de polystyrène expansé ou 6 à 9 cm de laines minérales. Toutefois, ces panneaux sont très fragiles puisqu'un endommagement de la pellicule étanche entraîne une perte du vide et par conséquent une diminution immédiate des performances isolantes.
La jointure entre deux panneaux sous vide peut toutefois constituer un pont thermique et donc être néfaste aux propriétés isolantes recherchées.

Le bloc de construction selon la présente invention présente l'avantage d'avoir d'excellentes propriétés isolantes, en raison de la présence d'un panneau sous vide dans la structure. Le fait que ce panneau soit encapsulé dans une mousse organique permet d'une part d'assurer la protection du panneau sous vide et d'autre part d'améliorer sa tenue au vieillissement, tout en limitant la présence de ponts thermiques au niveau des jointures.
Un tel bloc de construction est notamment utilisé pour la réalisation de murs et/ou de parois comme élément porteur et à la fois comme élément isolant.

Le bloc de construction selon la présente invention est de forme parallélépipédique dont les dimensions peuvent varier typiquement entre 250 et 350 mm pour la largeur, 190 et 300 mm pour la hauteur et 400 et 600 mm pour la longueur. Le bloc selon l'invention a par exemple les dimensions suivantes : 300x250x500, les dimensions correspondant respectivement à la largeur, la hauteur et la longueur étant données en mm.

Le panneau isolant sous vide utilisé dans le bloc isolant selon la présente invention a classiquement une épaisseur comprise entre 20 et 50 mm. Ses autres dimensions sont fonction de la taille du bloc de construction souhaité et sont légèrement inférieures à celles données ci-dessus de façon à ce que la mousse organique puisse encapsuler la totalité panneau isolant sous vide.
La mousse organique utilisée pour encapsuler le panneau isolant sous vide est une mousse organique expansée, c'est-à dire qui gonfle en séchant, de type polyuréthane, polyisocyanurate ou phénolique.
Les mousses préférées sont les mousses en polyuréthane ou en polyisocyanurate.

Les mousses de polyuréthanes sont fabriquées à partir d'isocyanates et d'alcools de type polyols. Une mousse de polyuréthane a classiquement un coefficient de conductivité thermique de l'ordre de 0,021 à 0,025 W/(m.K).

Les mousses de polyisocyanurates sont fabriquées directement à partir d'isocyanates, sans polyol. Toutefois, il est possible d'obtenir un produit ayant une résistance au feu améliorée, en faisant régir un large excès d'isocyanates (méthylène diphényl diisocyanate) avec des polyols. Le polyisocyanurate peut donc être considéré comme une amélioration du polyuréthane. Il possède à température ambiante un coefficient de conductivité thermique de l'ordre de 0,023 W/(m.K).

L'addition d'un produit de gonflement ou d'eau assure la formation de bulles de gaz. Dans le cas d'une mousse de polyuréthane, le gaz d'expansion utilisé couramment est du pentane. Il reste donc prisonnier dans les bulles formées dans la mousse et présente l'avantage d'avoir une conductivité thermique plus faible que l'air.

Tout procédé connu par l'homme de l'art pour la fabrication de la mousse organique peut être utilisé dans le cadre de la présente invention.

La densité d'une mousse de polyuréthane entourant le panneau sous vide est typiquement comprise entre 30 et 50 kg/m³.

L'épaisseur de mousse organique entourant le panneau isolant sous vide est généralement comprise entre 10 et 25 mm.

Ces blocs sont fabriqués à partir de billes d'argile expansée comportant une structure interne poreuse et également connu sous la marque Leca®. Ces billes sont mélangées à du ciment et aux constituants additionnels pour former des blocs. La conductivité thermique de ce type de béton aggloméré est classiquement d'environ 0,11 à 0.23 W/(m.K).

L'épaisseur de chacun des demi-blocs est préférentiellement comprise entre 60 et 150 mm.
La surface des demi-blocs en béton aggloméré présente une certaine rugosité, qui, sans la présence d'une certaine épaisseur de mousse organique, risquerait d'endommager le film protecteur du panneau isolant sous vide et par conséquent de provoquer des fuites.

Les faces internes de chacun des demi-blocs peuvent avoir des formes différentes : elles peuvent être planes ou rainurées en forme de créneaux à angles aigus (également souvent appelés « fishtail » en anglais).

De façon préférée, le panneau isolant sous vide est placé à équidistance des faces internes des deux demi-blocs.

L'invention porte également sur différents procédés de fabrication des blocs de construction décrits ci-dessus au cours desquels les différentes parties constitutives du bloc sont assemblées.

Selon un premier mode de réalisation, l'encapsulation du panneau isolant sous vide dans la mousse organique est faite lors de la fabrication du bloc isolant, directement dans le moule permettant l'assemblage des différentes parties du bloc selon l'invention.

Le procédé de fabrication d'un bloc de construction isolant thermiquement selon la présente invention comprend les étapes suivantes :
- positionnement de deux demi-blocs dans un moule de telle sorte que les deux faces externes de chacun des demi-blocs soient placées contre les parois internes du moule,
- maintien dans le moule du panneau isolant sous vide sur lequel au moins un moyen d'espacement a été placé sur chacune de ses faces de telle sorte que des espaces vides soient créés entre les faces du panneau isolant sous vide et les faces internes de deux demi-blocs,
- remplissage desdits espaces vides par un ou plus plusieurs précurseurs de la mousse organique,
- maintien du moule fermé sous pression pendant l'expansion et le durcissement de la mousse organique, de telle sorte que la mousse organique, en durcissant, permette l'assemblage des deux demi-blocs et du panneau isolant sous vide et,
- retrait du moule du bloc assemblé ainsi obtenu.

Le maintien du moule sous pression est conservé jusqu'à ce que la mousse organique obtienne une consistance stable. Classiquement pour une mousse en polyuréthane, le moule est maintenu fermé pendant environ 3 minutes.
Cette durée dépend notamment du type de mousse, ainsi que de l'épaisseur de la couche de couche entourant le panneau isolant sous vide.

Le moyen d'espacement placé sur chacune des faces du panneau isolant sous vide permet de laisser un espace vide autour dudit panneau. Cet espace vide sera rempli par les précurseurs de mousse organique et après expansion et durcissement formera la protection autour du panneau isolant sous vide.
Le moyen d'espacement peut être une cale placée sur chaque face du panneau isolant sous vide, par exemple placée dans les coins des faces.
Le moyen d'espacement peut également avoir la forme d'un cadre placé sur une partie ou sur la totalité de la tranche du panneau isolant sous vide.

Avantageusement, le moyen d'espacement est en polystyrène ou en polyuréthane. De façon préférée, les moyens d'espacement sont des cales ou un cadre en polyuréthane.

Selon le mode de réalisation du procédé de fabrication d'un bloc selon la présente invention décrit ci-dessus, l'assemblage entre les différentes parties, constituées par le panneau isolant sous vide et les deux demi-blocs en béton aggloméré, est directement faite lors de l'expansion et du durcissement de la mousse organique qui permet l'adhésion du panneau sous vide encapsulé dans la mousse avec les deux demi-blocs.

La totalité du bloc isolant est, selon ce mode de réalisation, fabriqué in-situ dans un moule unique.

Sous le terme « in situ », on comprend que la totalité du bloc est fait dans un même moule : l'adhésion entre les différentes parties constitutives du bloc (deux demi-blocs et panneau isolant sous vide) est réalisée par le moussage in-situ de la mousse organique.

Selon un deuxième mode de réalisation, le procédé de fabrication du bloc isolant thermiquement selon la présente invention comprend une première étape d'encapsulation du panneau isolant sous vide dans une mousse organique, réalisée dans un dispositif différent de celui utilisé pour la fabrication du bloc isolant lui-même. L'encapsulation peut être effectuée par toute méthode connue de l'homme de l'art : le panneau isolant sous vide est placé dans un moule et les précurseurs organiques de la mousse formant l'encapsulation sont versés dans le moule, et maintenus sous pression dans le moule fermé pendant l'expansion et le durcissement de celle-ci.

Le panneau isolant sous vide obtenu après cette étape est ainsi encapsulé dans une mousse organique.

L'étape d'encapsulation est réalisée dans un moule qui peut avoir des faces internes planes ou des faces internes en forme de créneaux à angles aigus.

Ainsi, la mousse une fois expansée et durcie peut avoir directement la forme recherchée, par exemple en forme de créneaux à angles aigus.

Si le moule est de forme différente, la mousse organique durcie peut être mise en forme par découpe à la forme souhaitée. Ainsi, si l'étape d'encapsulation est réalisée dans un moule de forme quelconque, le procédé de fabrication du bloc isolant peut comprendre en outre une étape de mise en forme de la mousse une fois durcie par découpe.

Ainsi, à l'issue de l'étape d'encapsulation du panneau isolant sous vide, la mousse durcie peut avoir soit des faces verticales planes, soit des faces verticales en forme de créneaux à angles aigus.
Les faces dites « verticales » de la mousse sont celles qui sont parallèles aux faces verticales du panneau isolant sous vide.

Le procédé de fabrication du bloc isolant thermiquement selon la présente invention est mis en oeuvre de deux façons différentes selon que la mousse durcie entourant le panneau isolant sous vide a des faces planes ou des faces en forme de créneaux à angles aigus.

Selon un autre mode de réalisation, le procédé de fabrication du bloc isolant thermiquement selon la présente invention comprend :
- une première étape d'encapsulation du panneau isolant sous vide dans une mousse organique de telle sorte que la mousse organique durcie entourant ledit panneau a des faces verticales en forme de créneaux à angles aigus,
- une étape de positionnement et maintien du panneau isolant sous vide encapsulé dans un moule de forme parallélépipédique, de préférence au centre du moule, de sorte à laisser des espaces vides entre le panneau isolant sous vide encapsulé et les faces internes du moule,
- une étape de remplissage des espaces laissés vide par coulage dans le moule, autour du panneau isolant sous vide encapsulé, de béton aggloméré pour former les deux demi-blocs,
- une étape de retrait du moule du bloc isolant ainsi formé comprenant le panneau isolant sous vide, après durcissement du béton aggloméré.

Le moule de forme parallélépipédique utilisé a des dimensions correspondantes à celles souhaitées pour le bloc isolant thermique.

Ainsi, selon ce mode de réalisation, la fixation des différentes parties composant le bloc isolant est réalisée directement par le durcissement du béton aggloméré, sans nécessiter l'ajout d'un adhésif. Les deux demi-blocs en béton aggloméré sont formés directement dans le moule où se trouve le panneau isolant sous vide encapsulé dans une mousse durcie ayant une forme de créneaux à angles aigus. Lors du remplissage du moule, les faces internes des deux demi-blocs en contact avec le panneau isolant sous vide encapsulé prennent donc directement la forme souhaitée, en créneaux à aigles aigus, avec des motifs complémentaires de ceux de la mousse durcie.

Les blocs de construction selon la présente invention ont un coefficient de transmission thermique compris entre 0,05 et 0,15 W/m².K.

### Description sommaire des figures :

La figure 1 représente une coupe d'un bloc isolant thermiquement selon la présente invention, dans lequel les faces internes des demi-blocs en béton aggloméré sont planes.
La figure 2 représente une coupe d'un bloc isolant thermiquement selon la présente invention, dans lequel les faces internes des demi-blocs en béton aggloméré sont en forme de créneaux à angles aigus.
La figure 3a représente une vue d'un panneau isolant sous vide placé dans des moyens d'espacement, pour la fabrication du bloc isolant thermiquement selon la présente invention.
La figure 3b représente une coupe d'un bloc isolant thermiquement selon la présente invention comprenant un panneau isolant sous vide placé dans un cadre.

### Description détaillée des figures

Le bloc (1) de construction isolant thermiquement selon la présente invention est constitué de deux demi-blocs (2a, 2b) en béton aggloméré comprenant des granulats en argile expansée, chacun des blocs ayant des faces externes (3a, 3b) et des faces internes (4a, 4b).
Un panneau isolant sous vide (5) est compris dans la structure du bloc entre les faces internes (4a, 4b) des deux demi-blocs.
L'espace (6) situé entre les demi-blocs (2a, 2b) et le panneau isolant sous vide est rempli par de la mousse organique, qui, une fois durcie, permet avantageusement de protéger le panneau isolant sous vide tout en gardant de bonnes propriétés d'isolant thermique.

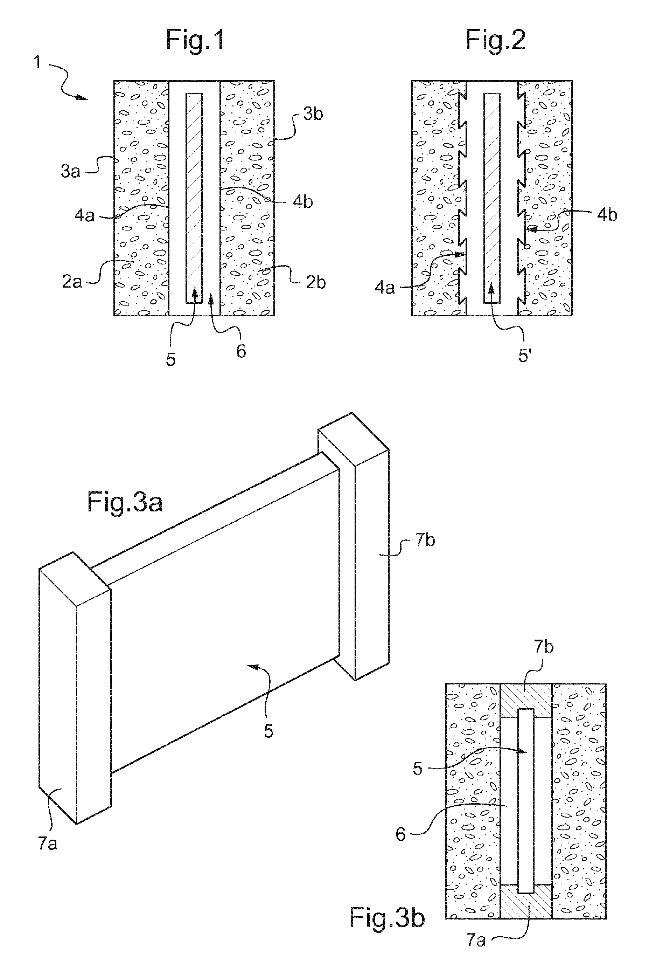

Dans le mode de réalisation représenté sur la Figure 1, les faces internes (4a, 4b) des demi-blocs (2a, 2b) sont planes.
Dans cette configuration, si la mousse organique est formée in-situ, pendant la fabrication du bloc isolant (1), il n'est pas nécessaire de prévoir une couche d'adhésif pour assembler les différents éléments du bloc (1). La mousse organique remplissant les espaces (6) situés autour du panneau isolant sous vide (5) va jouer le rôle d'adhésif et va permettre, après expansion et durcissement, que les différentes parties constitutives du bloc (1) tiennent ensemble.

Dans le mode de réalisation représenté sur la Figure 2, les faces internes (4a, 4b) des demi-blocs ont une forme crantée.

L'assemblage de la partie du bloc correspondant au panneau sous vide (5) encapsulé dans de la mousse organique et des deux demi-blocs est fait de façon mécanique, par maintien des deux parties ayant des géométries complémentaires. Pour se faire, la mousse organique durcie doit avoir la forme adéquate pour être maintenue assemblée avec les demi-blocs. Elle est donc nécessairement crantée.

La mise en forme de la mousse organique peut être faite de différentes façons. Si l'encapsulation du panneau isolant sous vide (5) dans la mousse organique est effectuée de façon indépendante de la fabrication du bloc (1), c'est-à-dire qu'elle est faite dans un moule dédié à l'encapsulation, le moule peut avoir la forme de créneaux complémentaires. Dans ce cas, le panneau sous vide (5) encapsulé peut être directement placé dans le moule servant à la fabrication des deux demi-blocs (2a, 2b), le maintien se faisant par un système de tenons-mortaises.

Si le moule n'a pas la forme adéquate permettant d'obtenir une mousse durcie directement à la forme incorporable entre les deux demi-blocs, il est possible de prévoir de découper la mousse avec la géométrie permettant l'assemblage des différentes pièces, avant le placement du panneau isolant sous vide encapsulé dans le moule servant à la fabrication des deux demi-blocs (2a, 2b).

Lorsque l'encapsulation du panneau sous vide (5) est réalisée in-situ, les demi-blocs (2a, 2b) sont placés dans un moule, les faces externes (3a, 3b) des demi-blocs étant placées contre les parois internes du moule.
Afin de positionner dans le moule le panneau sous vide (5), de préférence à équidistance des faces internes (4a, 4b) des demi-blocs, le panneau (5) est équipé de moyens d'espacement qui permettent de le maintenir en place dans le moule.
Ces moyens d'espacement peuvent être des cales placées sur chacune des surfaces du panneau isolant sous vide (5). Ces cales ne sont pas représentées sur les figures.
Les moyens d'espacement peuvent également se présenter sous la forme d'un cadre entourant une partie ou la totalité de chacune des tranches du panneau isolant sous vide (5).
La figure 3a donne une vue d'un panneau isolant sous vide (5) dont chacune des tranches sont placées dans des cadres (7a, 7b). De cette façon le panneau isolant sous vide peut être stabilisé dans le moule à la distance souhaitée entre les deux demi-blocs (2a, 2b). Sur la figure 3a, le cadre (7a, 7b) est placé sur la totalité de la tranche verticale du panneau (5). Il est également possible de placer un cadre sur seulement une partie des tranches du panneau (5).
La figure 3b représente une coupe d'un bloc isolant (1) selon la présente invention, fabriqué par un procédé dans lequel l'encapsulation se fait in-situ. Les parties 7a et 7b du cadre de maintien du panneau sous vide isolant (5) sont donc intégrées dans la structure du bloc isolant(1).

## Revendications

1. Bloc (1) de construction isolant thermiquement comprenant de deux demi-blocs (2a, 2b) en béton aggloméré ayant chacun une face interne (4a, 4b) et une face externe (3a, 3b) et un panneau isolant sous vide (5) placé entre les faces internes (4a, 4b) de chacun des deux demi-blocs (2a, 2b) et encapsulé dans une mousse organique expansée, **caractérisé en ce qu'**il est constitué uniquement des demi-blocs (2a, 2b) en béton aggloméré comprenant des granulats en argile expansée assemblés avec le panneau isolant sous vide encapsulé dans la mousse organique.

2. Bloc selon la revendication précédente **caractérisé en ce que** la mousse organique est une mousse de polyuréthane, une mousse de polyisocyanurate ou une mousse phénolique.

3. Bloc selon l'une des revendications précédentes **caractérisé en ce que** les faces internes (4a, 4b) des demi-blocs (2a, 2b) sont planes.

4. Bloc selon l'une des revendications 1 à 2 **caractérisé en ce que** les faces internes (4a, 4b) des demi-blocs (2a, 2b) sont rainurées en forme de créneaux à angles aigus.

5. Bloc selon l'une des revendications précédentes **caractérisé en ce que** le panneau isolant sous vide (5) est placé à équidistance des faces internes (4a, 4b) des deux demi-blocs (2a, 2b).

6. Bloc selon l'une des revendications précédentes **caractérisé en ce qu'il** est de forme parallélépipédique, de préférence avec une largeur comprise entre 250 et 350 mm, une hauteur entre 190 et 300 mm et une longueur entre 400 et 600 mm.

7. Procédé de fabrication d'un bloc (1) de construction isolant thermiquement comprenant deux demi-blocs (2a, 2b) en béton aggloméré comprenant des granulats en argile expansée et ayant chacun
une face interne (4a, 4b) et une face externe (3a, 3b) selon l'une des revendications 1 à 6 **caractérisé en ce qu'il** comprend les étapes suivantes :
- positionnement de deux demi-blocs dans un moule de telle sorte que les deux faces externes de chacun des demi-blocs soient placées contre les parois internes du moule,
- maintien dans le moule du panneau isolant sous vide sur lequel au moins un moyen d'espacement a été placé sur chacune de ses faces de telle sorte que des espaces vides soient créées entre les faces du panneau isolant sous vide et les faces internes de deux demi-blocs,
- remplissage desdits espaces vides par un ou plus plusieurs précurseurs organiques de la mousse,
- maintien du moule fermé sous pression pendant l'expansion et le durcissement de la mousse organique, de telle sorte que la mousse organique permette l'assemblage des deux demi-blocs et du panneau isolant sous vide et,
- retrait du moule du bloc assemblé ainsi obtenu.

8. Procédé selon la revendication 7 **caractérisé en ce que** le moyen d'espacement (7a, 7b) est une cale placée sur chaque face du panneau isolant (5).

9. Procédé selon la revendication 7 **caractérisé en ce que** le moyen d'espacement (7a, 7b) est un cadre placé sur une partie ou sur la totalité de la tranche du panneau isolant sous vide (5).

10. Procédé de fabrication d'un bloc (1) de construction isolant thermiquement comprenant deux demi-blocs (2a, 2b) en béton aggloméré comprenant des granulats en argile expansée et ayant chacun une face interne (4a, 4b) et une face externe (3a, 3b) selon l'une des revendications 1 à 6 **caractérisé en ce qu'il** comprend :
- une première étape d'encapsulation du panneau isolant sous vide dans une mousse organique de telle sorte que la mousse organique durcie entourant ledit panneau a des faces verticales ayant une forme de créneaux à angles aigus,
- une étape de positionnement et maintien du panneau isolant sous vide encapsulé dans un moule de forme parallélépipédique, de préférence au centre du moule, de sorte à laisser des espaces vides entre le panneau isolant sous vide encapsulé et les faces internes du moule,
- une étape de remplissage des espaces laissés vide par coulage dans le moule, autour du panneau isolant sous vide encapsulé, de béton aggloméré pour former les deux demi-blocs,
- une étape de retrait du moule du bloc isolant ainsi formé comprenant le panneau isolant sous vide, après durcissement du béton aggloméré.

11. Procédé selon la revendication 10, **caractérisé en ce que** l'étape d'encapsulation est réalisée dans un moule en forme de créneaux à angles aigus.

12. Procédé selon la revendication 10, **caractérisé en ce que** l'étape d'encapsulation est réalisée dans un moule de forme quelconque, et comprend en outre une étape de mise en forme de la mousse une fois durcie par découpe.

## Patentansprüche

1. Wärmedämmender Blockbaustein (1), der zwei Halbblöcke (2a, 2b) aus Stampfbeton, die jeder eine Innenfläche (4a, 4b) und eine Außenfläche (3a, 3b) aufweisen, und eine Vakuumisolierungsplatte (5) aufweist, die zwischen den Innenflächen (4a, 4b) jedes der zwei Halbblöcke (2a, 2b) platziert ist und in einen aufgeschäumten organischen Schaum eingekapselt ist, **dadurch gekennzeichnet, dass** er nur von den Halbblöcken (2a, 2b) aus Stampfbeton gebildet ist, die Granulate aus Blähton enthalten, die mit der in den organischen Schaum eingekapselten Vakuumisolierungsplatte zusammengefügt sind.

2. Blockbaustein nach dem vorhergehenden Anspruch, **dadurch gekennzeichnet, dass** der organische Schaum ein Polyurethan-Schaum, ein Polyisocyanat-Schaum oder ein Phenolschaum ist.

3. Blockbaustein nach einem der vorhergehenden Ansprüche, **dadurch gekennzeichnet, dass** die Innenflächen (4a, 4b) der Halbblöcke (2a, 2b) eben sind.

4. Blockbaustein nach einem der Ansprüche 1 bis 2, **dadurch gekennzeichnet, dass** die Innenflächen (4a, 4b) der Halbblöcke (2a, 2b) mit Rillen in Form von Zinnen mit spitzen Winkeln versehen sind.

5. Blockbaustein nach einem der vorhergehenden Ansprüche, **dadurch gekennzeichnet, dass** die Vakuumisolierungsplatte (5) in gleichem Abstand von den Innenflächen (4a, 4b) der zwei Halbblöcke (2a, 2b) platziert ist.

6. Blockbaustein nach einem der vorhergehenden Ansprüche, **dadurch gekennzeichnet, dass** er quaderförmig ist, vorzugsweise mit einer Breite zwischen 250 und 350 mm, einer Höhe zwischen 190 und 300 mm und einer Länge zwischen 400 und 600 mm.

7. Verfahren zum Herstellen eines wärmedämmenden Blockbausteins, der zwei Halbblöcke (2a, 2b) aus Stampfbeton aufweist, die Granulate aus Blähton enthalten und jeder eine Innenfläche (4a, 4b) und eine Außenfläche (3a, 3b) aufweisen, nach einem der Ansprüche 1 bis 6, **dadurch gekennzeichnet, dass** es die folgenden Schritte umfasst:
- Anordnen von zwei Halbblöcken in einem Formwerkzeug, so dass die zwei Außenflächen jedes der Halbblöcke gegen die Innenwände des Formwerkzeugs platziert sind,
- Halten der Vakuumisolierungsplatte, auf der mindestens ein Abstandsmittel auf jeder ihrer Flächen platziert wurde, in dem Formwerkzeug, so dass Hohlräume zwischen den Flächen der Vakuumisolierungsplatte und den Innenflächen der zwei Halbblöcke geschaffen werden,
- Verfüllen der Hohlräume mit einem oder mehreren organischen Vorläufer(n) des Schaums,
- Halten des geschlossenen Formwerkzeugs unter Druck während des Aufschäumens und des Aushärtens des organischen Schaums, so dass der organische Schaum das Zusammenfügen der zwei Halbblöcke und der Vakuumisolierungsplatte gestattet,
- Entnehmen des so erhaltenen zusammengefügten Blocks aus dem Formwerkzeug.

8. Verfahren nach Anspruch 7, **dadurch gekennzeichnet, dass** das Abstandsmittel (7a, 7b) ein Keil ist, der an jeder Fläche der Vakuumisolierungsplatte (5) platziert wird.

9. Verfahren nach Anspruch 7, **dadurch gekennzeichnet, dass** das Abstandsmittel (7a, 7b) ein Rahmen ist, der auf einem Teil oder auf dem gesamten Rand der Vakuumisolierungsplatte (5) platziert wird.

10. Verfahren zum Herstellen eines wärmedämmenden Blockbausteins (1), der zwei Halbblöcke (2a, 2b) aus Stampfbeton aufweist, die Granulate aus Blähton enthalten und jeder eine Innenfläche (4a, 4b) und eine Außenfläche (3a, 3b) aufweisen, nach einem der Ansprüche 1 bis 6, **dadurch gekennzeichnet, dass** es Folgendes umfasst:
- einen ersten Schritt des Einkapselns der Vakuumisolierungsplatte in einem organischen Schaum, so dass der ausgehärtete organische Schaum, der die Platte umgibt, zwei vertikale Flächen mit der Form von Zinnen mit spitzen Winkeln hat,
- einen Schritt des Anordnens und des Haltens der eingekapselten Vakuumisolierungsplatte in einem quaderförmigen Formwerkzeug, vorzugsweise in der Mitte des Formwerkzeugs, so dass Hohlräume zwischen der eingekapselten Vakuumisolierungsplatte und den Innenflächen des Formwerkzeugs belassen werden,
- einen Schritt des Verfüllens der belassenen Hohlräume durch Gießen von Stampfbeton in die Form um die eingekapselte Vakuumisolierungsplatte herum, um die zwei Halbblöcke zu bilden,
- einen Schritt des Entnehmens des so gebildeten Dämmblocks, der die Vakuumisolierungsplatte enthält, aus dem Formwerkzeug nach Aushärten des Stampfbetons.

11. Verfahren nach Anspruch 10, **dadurch gekennzeichnet, dass** der Schritt des Einkapselns in einem Formwerkzeug mit der Form von Zinnen mit spitzen Winkeln erfolgt.

12. Verfahren nach Anspruch 10, **dadurch gekennzeichnet, dass** der Schritt des Einkapselns in einem Formwerkzeug mit beliebiger Form erfolgt und ferner einen Schritt des Informbringens des Schaums nach dessen Aushärten durch Zuschneiden umfasst.

## Claims

1. Thermally insulating building block (1) comprising two half-blocks (2a, 2b) made of agglomerated concrete, each having an internal face (4a, 4b) and an external face (3a, 3b), and a vacuum insulating panel (5) placed between the internal faces (4a, 4b) of each of the two half-blocks (2a, 2b) and encapsulated in an expanded organic foam, **characterized in that** it consists solely of the half-blocks (2a, 2b) made of agglomerated concrete comprising aggregates made of expanded clay that are assembled with the vacuum insulating panel encapsulated in the organic foam.

2. Block according to the preceding claim, **characterized in that** the organic foam is a polyurethane foam, a polyisocyanurate foam or a phenolic foam.

3. Block according to either of the preceding claims, **characterized in that** the internal faces (4a, 4b) of the half-blocks (2a, 2b) are planar.

4. Block according to either of Claims 1 and 2, **characterized in that** the internal faces (4a, 4b) of the half-blocks (2a, 2b) are grooved in the form of acutely angled crenelations.

5. Block according to one of the preceding claims, **characterized in that** the vacuum insulating panel (5) is placed equidistantly from the internal faces (4a, 4b) of the two half-blocks (2a, 2b).

6. Block according to one of the preceding claims, **characterized in that** it has a parallelepipedal shape, preferably with a width of between 250 and 350 mm, a height of between 190 and 300 mm and a length of between 400 and 600 mm.

7. Process for manufacturing a thermally insulating building block (1) comprising two half-blocks (2a, 2b) made of agglomerated concrete comprising aggregates made of expanded clay and each having an internal face (4a, 4b) and an external face (3a, 3b) according to one of Claims 1 to 6, **characterized in that** it comprises the following steps:
- two half-blocks are positioned in a mould in such a way that the two external faces of each of the half-blocks are placed against the internal walls of the mould;
- the vacuum insulating panel, on which at least one spacing means has been placed on each of its faces in such a way that empty spaces are created between the faces of the vacuum insulating panel and the internal faces of two half-blocks, is held in place in the mould;
- said empty spaces are filled with one or more more organic precursors of the foam;
- the closed mould is held under pressure during the expansion and curing of the organic foam in such a way that the organic foam allows the two half-blocks to be assembled with the vacuum insulating panel; and
- the assembled block thus obtained is removed from the mould.

8. Process according to Claim 7, **characterized in that** the spacing means (7a, 7b) is a spacer placed on each face of the insulating panel (5).

9. Process according to Claim 7, **characterized in that** the spacing means (7a, 7b) is a frame placed over part or all of the edge of the vacuum insulating panel (5) .

10. Process for manufacturing a thermally insulating building block (1) comprising two half-blocks (2a, 2b) made of agglomerated concrete comprising aggregates made of expanded clay and each having an internal face (4a, 4b) and an external face (3a, 3b) according to one of Claims 1 to 6, **characterized in that** it comprises:
- a first step of encapsulating the vacuum insulating panel in an organic foam so that the cured organic foam surrounding said panel has vertical faces having a form of acutely angled crenelations;
- a step of positioning and holding in place the encapsulated vacuum insulating panel in a mould of parallelepipedal shape, preferably at the centre of the mould, so as to leave empty spaces between the encapsulated vacuum insulating panel and the internal faces of the mould;
- a step of filling the spaces left empty by pouring agglomerated concrete into the mould, around the encapsulated vacuum insulating panel, in order to form the two half-blocks;
- a step of removing from the mould the insulating block thus formed comprising the vacuum insulating panel, after hardening of the agglomerated concrete.

11. Process according to Claim 10, **characterized in that** the encapsulation step is carried out in a mould having the shape of acutely angled crenelations.

12. Process according to Claim 10, **characterized in that** the encapsulation step is carried out in a mould having any shape and additionally comprises a step of shaping the foam, once cured, by cutting.
